# EUROPEAN PATENT APPLICATION

(11) **EP 2 873 885 A1**
(43) Date of publication of application: **20.05.2015**
(21) Application number: 13817180.6
(22) Date of filing: 10.07.2013
(51) Int. Cl.: F16D 3/20, F16D 3/205

(54) **TRIPOD-TYPE CONSTANT-VELOCITY JOINT AND METHOD FOR MANUFACTURING SAME**

(30) Priority: 11.07.2012 JP 2012155104
(71) Applicant: JTEKT Corporation, Osaka-shi, Osaka 542-8502 (JP)
(72) Inventor: OOISO, Kenji, Osaka-shi Osaka 542-8502 (JP); MORIMOTO, Shunji, Osaka-shi Osaka 542-8502 (JP); UETA, Tatsuya, Osaka-shi Osaka 542-8502 (JP)
(74) Representative: TBK
(86) International application number: PCT/JP2013/068875
(87) International publication number: WO 2014/010629

(57) **Abstract**

In the present invention, a roller is provided with an external peripheral rolling surface molded by simultaneous processing of end surfaces of a plurality of rollers in a state in which the end surfaces are in contact with each other, and a projection for protruding in the axial direction from an axially directed end of the external peripheral rolling surface. The projection has a projection end surface in contact with an end surface of an adjacent roller during grinding of the external peripheral rolling surface, and an axially directed gap is formed between ends of adjacent rollers on the external peripheral rolling surface in the state in which the projection end surface is in contact. Furthermore, a gap is present between the projection and a tool used during processing of the external peripheral rolling surface.

## Description

### Technical Field

The present invention relates to a tripod constant velocity joint and a method of producing the same.

### Background Art

Usually, the outer peripheral surfaces of rollers constituting a tripod constant velocity joint are ground by a grinding wheel. Moreover, JP-A-2009-299800 (Patent Document 1) discloses that the outer peripheral surfaces of rollers are cut.

### Prior Art Reference

### Patent Document

Patent Document 1: JP-A-2009-299800

### Summary of the Invention

### Problems that the Invention is to Solve

In both of grinding and cutting, a process of processing the outer peripheral surfaces of rollers is performed on the rollers one by one. In the case of grinding, a plurality of rollers can be simultaneously ground by using a form grinding wheel. Namely, it is contemplated that a form grinding wheel is formed into a shape which is obtained by transfer of an outer peripheral surface formed in the case where a plurality of rollers are placed in juxtaposition, whereby the outer peripheral surfaces of the plurality of rollers are ground in a short time.

However, the axial sectional shape of the outer peripheral surface of a roller is arcuate. When two rollers are juxtaposed, therefore, the outer peripheral side in the vicinity of the contact portion of the two rollers is formed into a shape which is recessed at an acute angle. Therefore, the corresponding portions of a form grinding wheel are inevitably formed into a shape which is pointed at an acute angle. Consequently, this causes the life of the form grinding wheel to be shortened.

In a form grinding wheel, portions which are pointed at an acute angle are easily worn. When a plurality of rollers are simultaneously ground by using a form grinding wheel which has been worn, therefore, there arises a possibility that a desired shape may not be formed. Namely, there is a possibility that a protrusion is formed in an end of the outer peripheral surface of each of the rollers. When thus formed rollers are applied to a tripod constant velocity joint, the protruded portions of the rollers are in contact with the raceway groove of the outer ring. This leads to reduction of the durability of the raceway grooves. Therefore, the outer peripheral surfaces of a plurality of rollers cannot be simultaneously ground by a form grinding wheel.

Also in a cutting process, similarly with a grinding process, the tip end of a cutting tool is inevitably formed into a shape which is pointed at an acute angle, and hence the life of the cutting tool is very short. Therefore, simultaneous cutting cannot be performed.

The invention has been conducted in view of the above-discussed circumstances. It is an object of the invention to provide a tripod constant velocity joint in which, even when the outer peripheral surfaces of a plurality of rollers are simultaneously ground by using a form grinding wheel, the life of a tool can be prolonged, and a desired shape can be accurately obtained, and a method of producing such a joint. Means for Solving the Problems

The tripod constant velocity joint of this means is a tripod constant velocity joint comprising a roller which is rotatably supported by a tripod shaft and which is configured to roll along a raceway groove of an outer ring, wherein the roller includes: an outer peripheral rolling contact surface which is shaped by a simultaneous process in a state where end faces of a plurality of the rollers are in contact with each other; and a protrusion which is axially protruded further than an axial end of the outer peripheral rolling contact surface, and the protrusion: has a protruded end face which, when the outer peripheral rolling contact surface is processed, is in contact with the end face of one of the rollers which are adjacent to each other; forms an axial gap between ends of the outer peripheral rolling contact surfaces of the rollers which are adjacent to each other, in a state where the protruded end face is in contact with the end face; and has a gap with respect to a tool when the outer peripheral rolling contact surface is processed.

Furthermore, the tripod constant velocity joint may further comprise a regulating member which is configured to regulate an axial movement of the roller in at least one axial direction of the roller, wherein the roller may have a regulating end face which is contactable with the regulating member, in an end face on a side which is radially inner than the protrusion, and the protrusion may be axially protruded further than the regulating end face.

Furthermore, the roller may include the protrusion on each of the axial ends of the roller, and, when the outer peripheral rolling contact surface is processed, the protrusions of the rollers which are adjacent to each other may be in contact with each other.

Furthermore, the tool may be a form grinding wheel, and the outer peripheral rolling contact surfaces may be simultaneously ground by the form grinding wheel in a state where the end faces of the plurality of rollers are in contact with each other.

The method of producing a tripod constant velocity joint of the means is a method of producing a tripod constant velocity joint, the tripod constant velocity joint comprising a roller which is rotatably supported by a tripod shaft and which is configured to roll along a raceway groove of an outer ring, wherein the roller includes: an outer peripheral rolling contact surface which is shaped by a simultaneous process in a state where end faces of a plurality of the rollers are in contact with each other; and a protrusion which is axially protruded further than an axial end of the outer peripheral rolling contact surface, and the method includes: a placing step of placing the plurality of the rollers so that an end face of the protrusion of one of the rollers is in contact with an end face of the other roller, and forming an axial gap between ends of the outer peripheral rolling contact surfaces of the rollers which are adjacent to each other; and a processing step of having a gap between a tool and the protrusion, and shaping the outer peripheral rolling contact surfaces of the plurality of the rollers which are placed in the placing step, by a simultaneous process using the tool.

Furthermore, in the placing step, the rollers may be placed so that the end faces of the protrusions of the rollers which are adjacent to each other are in contact with each other.

### Effects of the Invention

According to the means, when a plurality of rollers are placed in juxtaposition, the protruded end face of one of the rollers is in contact with the end face of the other roller. At this time, the axial gap is formed between the ends of the outer peripheral rolling contact surfaces of the rollers which are adjacent to each other, and the further gap is formed between the protrusion and the tool when the outer peripheral rolling contact surfaces are processed. Since the gap is formed, the degree of pointedness of the shape of the tool can be moderated. As a result, the life of the tool can be prolonged. Since the degree of pointedness of the shape of the tool can be moderated, moreover, the tool has a shape which is resistant to wear. Also because of this, the life of the tool can be prolonged. Since the tool is resistant to wear, furthermore, the outer peripheral rolling contact surface can be accurately provided with a desired shape.

The regulating end face of the roller is a face for regulating the distance of the axial movement of the roller, since the regulating end face is contactable with the regulating member. On the other hand, the protrusion of the roller is located more closely to the radially outer side than the regulating end face, and axially protruded further than the regulating end face. Here, the regulating end face of the roller is contacted with the regulating member, and hence the protrusion of the roller is not in contact with the regulating member. Therefore, the protrusion is a portion which is used only in the production of the roller, and does not exert any influence on the function of the tripod constant velocity joint.

When each of the rollers has the protrusion on each of the axial ends of the roller, the protrusions can be contacted with each other. Therefore, the gap can be surely formed between the protrusions and the tool. Consequently, the life of the tool can be surely prolonged. Moreover, the roller can be formed into a shape which is axially symmetric. In production, therefore, it is possible to prevent the roller from being erroneously installed.

In the case where the invention is applied to simultaneous grinding using a form grinding wheel, since the roller has the above-described protrusion, the distal tip end of the portion which is pointed at an acute angle in the form grinding wheel is located in the gap between the protrusion and the form grinding wheel, and hence is not worn. Therefore, the portion which is pointed at an acute angle in the form grinding wheel is not worn, and hence the outer peripheral rolling contact surfaces of the rollers which are obtained by transfer of the form grinding wheel are not affected by the portion which is pointed at an acute angle in the form grinding wheel. Even in the case where a plurality of rollers are simultaneously ground, consequently, the outer peripheral rolling contact surfaces of the rollers can be accurately provided with a desired shape. As a result, the grinding cost can be reduced.

According to the method of producing a tripod constant velocity joint of the means, similarly with the above-described tripod constant velocity joint, the roller has the protrusion, and hence the degree of pointedness of the shape of the tool can be moderated. As a result, the life of the tool can be prolonged. Since the degree of pointedness of the shape of the tool can be moderated, moreover, the tool has a shape which is resistant to wear. Also because of this, the life of the tool can be prolonged. Since the tool is resistant to wear, furthermore, the outer peripheral rolling contact surface can be accurately provided with a desired shape.

Since the simultaneous process is performed in the state where the outer peripheral rolling contact surfaces of the rollers which are adjacent to each other are in contact with each other, the gap can be surely formed between the protrusions and the tool. Therefore, the life of the tool can be surely prolonged. The rollers can be applied to the case where the protrusion is formed on each of the axial end faces, and also to that where the protrusion is formed only on one of the axial end faces.

### Brief Description of the Drawings

[Fig. 1] Fig. 1 is a radial sectional view of a tripod constant velocity joint of a first embodiment of the invention, showing a portion of one of three tripod shafts.
[Fig. 2] Fig. 2 is an axial enlarged view of a roller in portion A of Fig. 1.
[Fig. 3] Fig. 3 is an axial sectional view of a state where, in the case where two rollers are to be produced, the two rollers are placed (a placing step), showing a form grinding wheel for simultaneously grinding the outer peripheral rolling contact surfaces of the two rollers.
[Fig. 4] Fig. 4 is a view of a state where, in the case where two rollers are to be produced, the outer peripheral rolling contact surfaces of the two rollers are ground by the form grinding wheel (a processing step).
[Fig. 5] Fig. 5 is an enlarged view of portion E of Fig. 4.
[Fig. 6] Fig. 6 is an axial sectional view of the form grinding wheel which has been worn.
[Fig. 7] Fig. 7 is a view of a state where the outer peripheral rolling contact surfaces of two rollers are ground by a form grinding wheel in a second embodiment of the invention.
[Fig. 8] Fig. 8 is a view of a state where the outer peripheral rolling contact surfaces of two rollers are ground by a form grinding wheel in a third embodiment of the invention.
[Fig. 9] Fig. 9 is a view of a state where the outer peripheral rolling contact surfaces of two rollers are cut by a cutting tool in a fourth embodiment of the invention.
[Fig. 10] Fig. 10 is an enlarged view of portion F of Fig. 9.

### Mode for Carrying Out the Invention

### <First embodiment>

### (Configuration of tripod constant velocity joint)

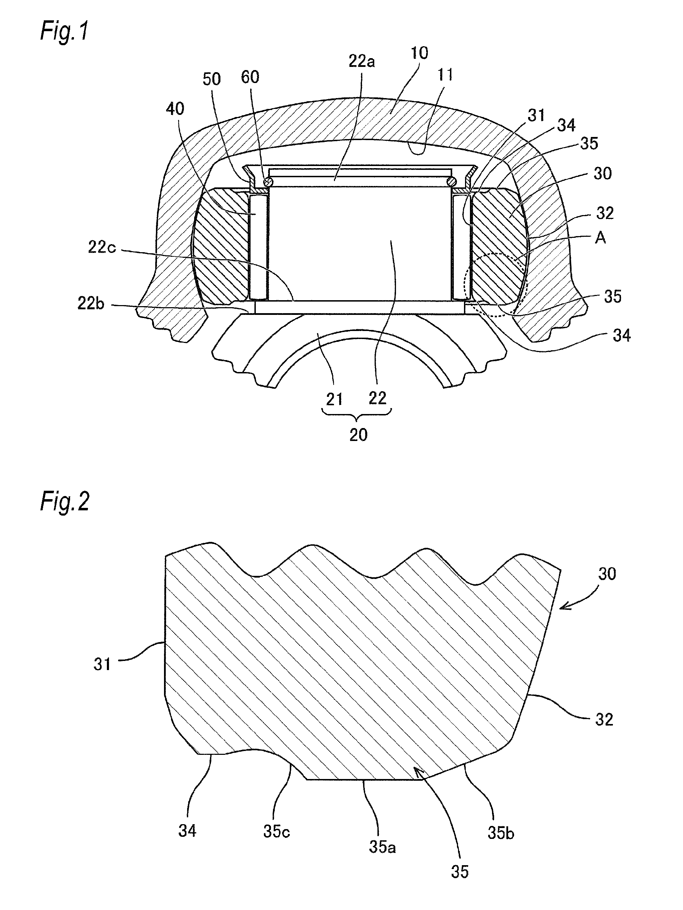

A tripod constant velocity joint of a first embodiment of the invention will be described with reference to Figs. 1 and 2. For example, the tripod constant velocity joint is used in coupling of a power transmission shaft of a vehicle. For example, the joint is used in a coupling portion of a differential and a drive shaft. As shown in Fig. 1, the tripod constant velocity joint is configured by an outer ring 10, a tripod 20, rollers 30, a plurality of rolling elements 40, retainers 50, and snap rings 60.

The outer ring 10 is formed into a bottomed tubular shape, and the outside of the bottom surface of the outer ring 10 is coupled to the differential. In the inner peripheral surface of the outer ring 10, three raceway grooves 11 which extend along the axial direction of the outer ring 10 are formed at equal intervals. In Fig. 1, only one of the raceway grooves 11 is shown. In the groove side surface of the raceway groove 11, the sectional shape which is perpendicular to the axis of the outer ring is formed so as to have an arcuate concave shape.

The tripod 20 includes a boss 21, and three tripod shafts 22 which radially extend from the boss 21. In the tip end side (radially outer side) of each of the tripod shafts 22, a ring groove 22a is formed over the entire periphery in the circumferential direction. The snap ring 60 is fitted into the ring groove 22a. The snap ring 60 acts on the retainer 50 as a member for preventing slipping off from the tripod shafts 22 from occurring. The retainer 50 has a role of preventing the rolling elements 40 from slipping off. Moreover, the retainer 50 regulates the movement of the roller 30 which exceeds a preset range, while allowing the rollers to axially move within the preset range.

In the basal end (on the side of the boss 21) of the tripod shaft 22, a roller seating surface 22b (corresponding to "regulating member" in the invention) which regulates the axial movement of the roller 30 is formed over the entire periphery. In a portion which is slightly closer to the tip end than the roller seating surface 22b, a rolling element seating surface 22c which regulates the axial movement of the rolling elements 40 is formed over the entire periphery. Namely, the rolling elements are axially positioned by the rolling element seating surface 22c and the retainer 50. Each of the roller seating surface 22b and the rolling element seating surface 22c is formed into an annular planar shape.

The roller 30 is formed into an annular shape which is axially symmetric, and its inner peripheral surface 31 is formed into a tubular shape. In the inner peripheral surface 31 of the roller 30, the axial sectional shape of the roller 30 is formed into a linear shape which is parallel to the axis of the roller 30. The roller 30 is rotatably supported by the outer peripheral side of the tripod shaft 22 through the plurality of rolling elements 40. The roller 30 is disposed so as to be axially movable with respect to the tripod shaft 22, and disposed while swinging with respect to the tripod shaft 22 is regulated. However, the axial movement range of the roller 30 is regulated by the roller seating surface 22b and the tip end of the retainer 50.

In the outer peripheral rolling contact surface 32 of the roller 30, the axial sectional shape is formed into an arcuate convex shape. The outer peripheral rolling contact surface 32 rolls along the raceway groove 11 of the outer ring 10. The outer peripheral rolling contact surface 32 is ground by a form grinding wheel.

As shown in Fig. 1, a regulating end face 34 and a protrusion 35 are formed on each of the axial end faces of the roller 30. As shown in Fig. 2, the regulating end face 34 is located in a radially inner side of the end face, and formed into a planar shape which can be contacted with the roller seating surface 22b of the tripod shaft 22.

The protrusions 35 are located more closely to the radially outer side than the regulating end faces 34, and axially protruded further than the regulating end faces 34 and the axial ends of the outer peripheral rolling contact surface 32. The protrusion 35 which is located on the side of the basal end of the tripod shaft 22 is formed so that it is not in contact with the tripod 20 in the state where the regulating end face 34 is in contact with the roller seating surface 22b (corresponding to "regulating member" in the invention). The protrusion 35 which is located on the side of the tip end of the tripod shaft 22 is formed so that it is not in contact with the retainer 50 and the raceway groove 11 of the outer ring 10 in the state where the regulating end face 34 or a corner portion of the regulating end face 34 is in contact with the retainer 50 (corresponding to "regulating member" in the invention). Therefore, the protrusions 35 are portions which are used only in the production of the roller 30 as described below, and do not exert any influence on the function of the tripod constant velocity joint.

Each of the protrusions 35 has: a protruded end face 35a; an inclined surface 35b through which the outer peripheral edge of the protruded end face 35a and the axial end of the outer peripheral rolling contact surface 32 are connected to each other; and a concave surface 35c through which the inner peripheral edge of the protruded end face 35a and the regulating end face 34 are connected to each other. The protruded end face 35a is formed into a planar shape which is perpendicular to the axis. The inclined surface 35b is formed into, for example, a tapered shape. The concave surface 35c is formed into a concave shape so as to, in the state where the regulating end face 34 is in contact with the roller seating surface 22b, form a gap with respect to a corner portion of the roller seating surface 22b.

### (Method of producing roller)

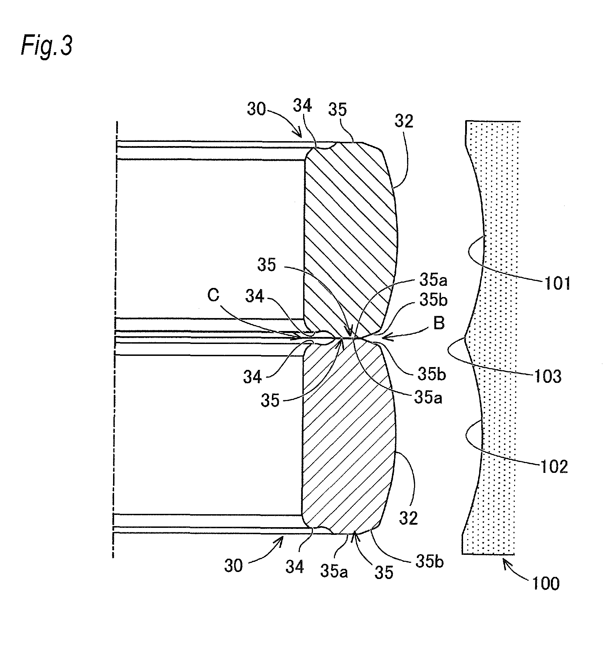

Next, a method of producing the roller 30 will be described. The roller 30 is formed by forging, and then the outer peripheral rolling contact surface 32 is ground. Here, a method of grinding the outer peripheral rolling contact surface 32 of the roller 30 will be described with reference to Figs. 3 to 6.

As shown in Fig. 3, two rollers 30 are placed while being coaxially arranged in juxtaposition (a placing step). At this time, the end faces of the rollers 30 are in contact with each other. Specifically, the protruded end face 35a of one of the rollers 30 is contacted with the protruded end face 35a of the other roller 30. Here, each of the protruded end faces 35a is a surface which is axially protruded further than the axial end of the outer peripheral rolling contact surface 32 and the regulating end face 34. In the contact state, therefore, an axial gap B is formed between the axial ends of the outer peripheral rolling contact surfaces 32, 32 of the rollers 30, 30 which are adjacent to each other. In the contact state, furthermore, a gap C is formed between the regulating end face 34 of one of the rollers 30 and the regulating end face 34 of the other roller 30.

A form grinding wheel 100 which simultaneously grinds the outer peripheral rolling contact surfaces 32 of the two rollers 30 is formed as shown in Fig. 3. Namely, the form grinding wheel 100 is formed into a disk-like shape, and two concave grooves 101, 102 are formed so as to be adjacent to each other in the axial direction. The concave grooves 101, 102 are formed into an arcuate concave shape, i.e., a shape in which the outer peripheral rolling contact surfaces 32 of the rollers 30 are transferred. Between the concave grooves 101, 102, therefore, a portion 103 which is pointed at an acute angle is formed in the radially outer side.

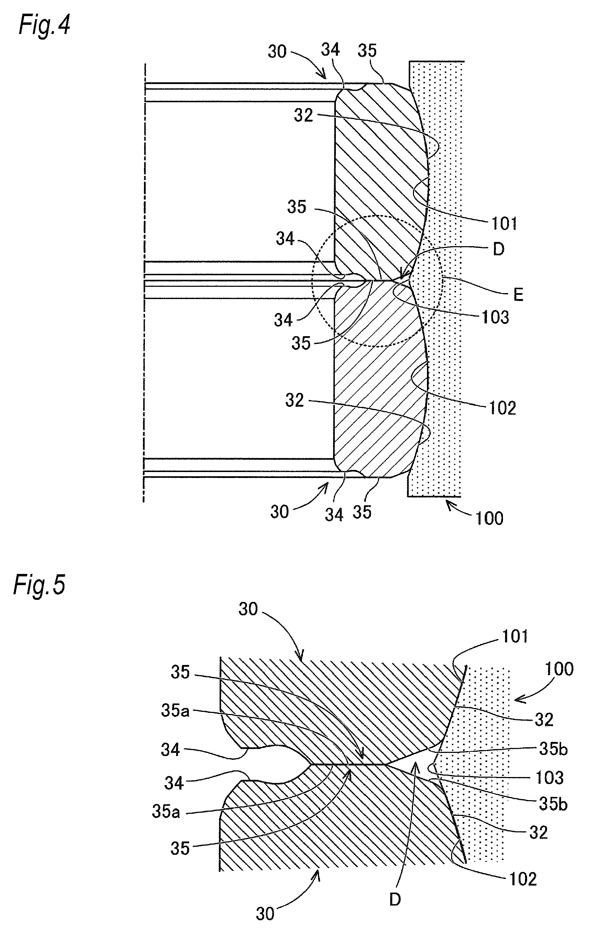

Then, the rollers 30, 30 and the form grinding wheel 100 are rotated, and both are approached each other. As shown in Fig. 4, thereafter, the concave grooves 101, 102 of the form grinding wheel 100 are contacted with the outer peripheral rolling contact surfaces 32, 32 of the rollers 30, 30, thereby simultaneously grinding the outer peripheral rolling contact surfaces 32, 32 (a processing step).

As shown in Figs. 4 and 5, at this time, a gap D is formed between the protrusions 35 and the form grinding wheel 100. Namely, the distal tip end of the portion 103 which is pointed at an acute angle in the form grinding wheel 100 is not in contact with the both rollers 30, 30, and the protrusions 35 are not ground by the form grinding wheel 100.

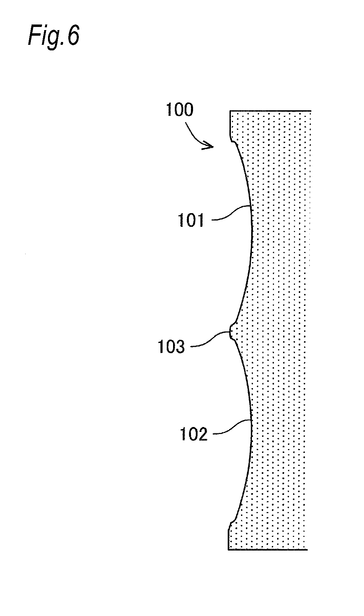

Therefore, the distal end of the pointed portion 103 is not worn. When a large number of rollers 30, 30 are ground, by contrast, the concave grooves 101, 102 are gradually worn. Then, the form grinding wheel 100 has a shape such as shown in Fig. 6. In the form grinding wheel 100 which has been worn, therefore, the pointed portion 103 remains in the initial shape, and only the portions of the concave grooves 101, 102 are worn.

When, after the form grinding wheel 100 is worn, the rollers 30, 30 are simultaneously ground, namely, the outer peripheral rolling contact surfaces 32 of the rollers 30 can be accurately provided with a desired shape. Particularly, portions which may remain unmachined, such as protrusions are not formed in the outer peripheral rolling contact surfaces 32 of the rollers 30. In this way, the two rollers 30, 30 can be simultaneously ground, and therefore the cost of grinding can be reduced.

Since the gap D is formed, moreover, the degree of pointedness of the pointed portion 103 of the form grinding wheel 100 can be moderated. Because of this, the life of the form grinding wheel 100 itself can be prolonged. When the degree of pointedness is moderated, the pointed portion 103 of the form grinding wheel 100 can be made to have a shape which is relatively resistant to wear. Also because of this, the life of the form grinding wheel 100 can be prolonged. Furthermore, the roller 30 has the shape which is axially symmetric. In production, therefore, it is possible to prevent the roller 30 from being erroneously installed.

### <Second embodiment>

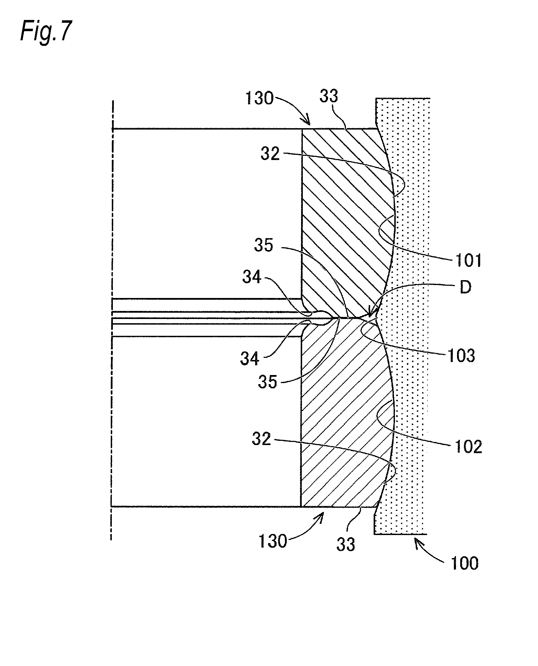

Next, a method of producing a roller 130 in a second embodiment will be described with reference to Fig. 7. In the above-described embodiment, the regulating end face 34 and the protrusion 35 are formed on each of the axial end faces of the roller 30. In this embodiment, the roller 130 has the regulating end face 34 and the protrusion 35 on only one of the axial end faces, and the other axial end face is formed as a flat end face 33. In this case, when simultaneous grinding is to be performed, as shown in Fig. 7, rollers are placed so that the protruded end face 35a of one of the rollers 130 and the protruded end face 35a of the other roller 130 are butted and contacted with each other. In a manner similar to that described above, then, the outer peripheral rolling contact surfaces 32 of the two rollers 130 are simultaneously ground by the form grinding wheel 100. Also in this case, when, after the form grinding wheel 100 is worn, the rollers 130, 130 are simultaneously ground, the outer peripheral rolling contact surfaces 32 of the rollers 30 can be accurately provided with a desired shape in a manner similar to that described above.

### <Third embodiment>

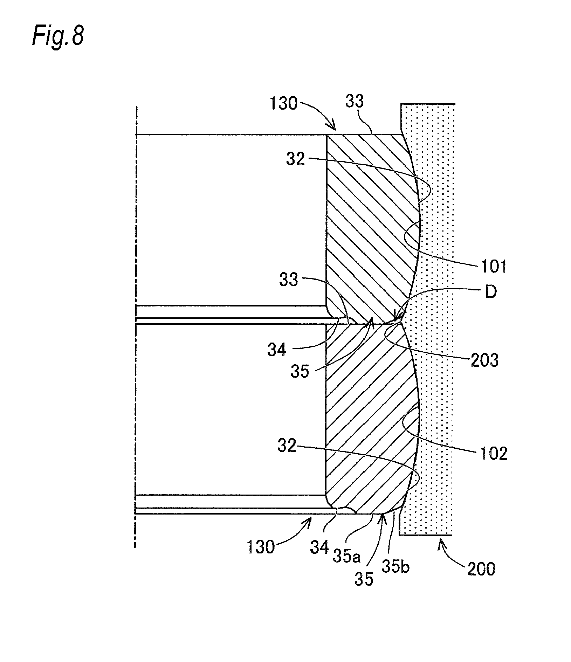

Next, a method of producing rollers 130 in a third embodiment will be described with reference to Fig. 8. In the second embodiment, the rollers are placed so that the protruded end faces 35a of the rollers 130 are butted each other. In this embodiment, in the simultaneous grinding of the rollers 130, 130, the rollers are placed so that the protruded end face 35a of one of the rollers 130 is contacted with the flat end face 33 of the other roller 130.

Also in this case, in a manner similar to that described above, a gap D is formed between a form grinding wheel 200, the protrusion 35, and the end face 33. Therefore, a pointed portion 203 of the form grinding wheel 200 is not worn. When, even after the concave grooves 101, 102 of the form grinding wheel 100 are worn, the rollers 130, 130 are simultaneously ground, therefore, the outer peripheral rolling contact surfaces 32 of the rollers 130 can be accurately provided with a desired shape. In this case, however, the gap D is narrow as compared with the first and second embodiments. According to the first and second embodiments, therefore, the gap D is ensured to be large, and hence the above-described effects can be attained more surely.

### <Fourth embodiment>

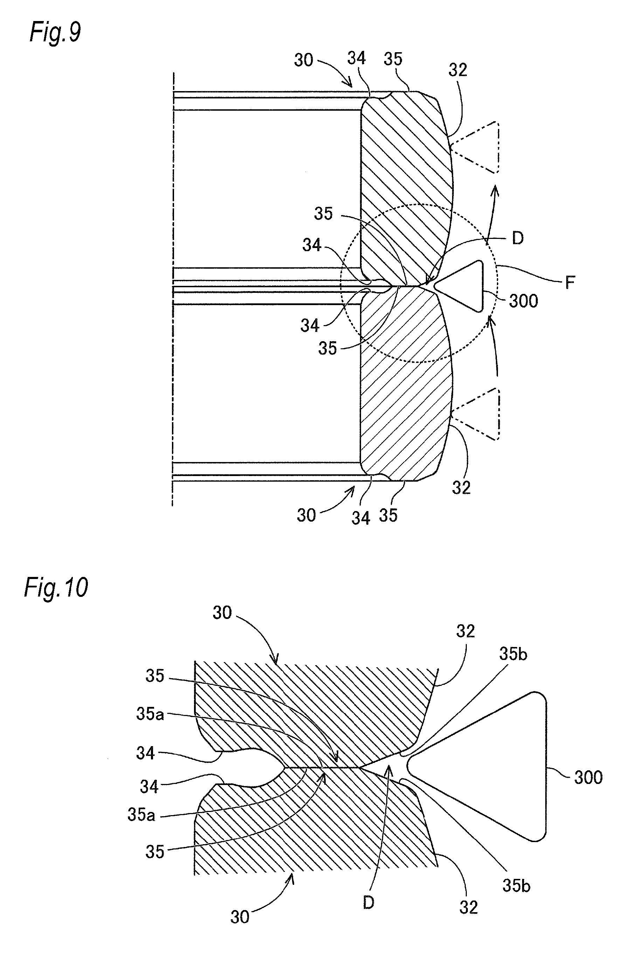

In the abov-described embodiments, the outer peripheral rolling contact surfaces 32 of the two rollers 30 or 130 are simultaneously ground by the form grinding wheel 100 or 200. Alternatively, as shown in Figs. 9 and 10, two rollers 30, 30 can be shaped by a cutting process with using a cutting tool 300 in a state where the rollers are axially juxtaposed.

Specifically, in a state where two rollers 30, 30 are axially juxtaposed as shown in Fig. 9, the process is performed by relatively moving the cutting tool 300 in the axial direction while rotating the rollers 30, 30. In the specification, this is referred to as simultaneous cutting. In the case where simultaneous cutting is to be performed, the formation of the gap D between the end face of one of the rollers 30, and that of the other roller 30 can mitigate the degree of pointedness of the pointed portion of the cutting tool 300. Because of this, the life of the cutting tool 300 can be prolonged.

The application is based on Japanese Patent Application (No. 2012-155104) filed July 11, 2012, and its disclosure is incorporated herein by reference.

### Industrial Applicability

According to the invention, in a tripod constant velocity joint, even when the outer peripheral surfaces of a plurality of rollers are simultaneously ground, the life of a form grinding wheel or a cutting tool can be prolonged, and a desired shape can be accurately obtained.

### Description of Reference Numerals and Signs

10: outer ring, 22: tripod shaft, 22b: roller seating surface, 30, 130: roller, 32: outer peripheral rolling contact surface, 34: regulating end face, 35: protrusion, 35a: protruded end face, 100, 200: form grinding wheel, 300: cutting tool, B: axial gap between ends of outer peripheral rolling contact surfaces of rollers which are adjacent to each other, D: gap between protrusion and form grinding wheel or cutting tool

## Claims

1. A tripod constant velocity joint comprising a roller which is rotatably supported by a tripod shaft and which is configured to roll along a raceway groove of an outer ring, wherein
the roller includes:
an outer peripheral rolling contact surface which is shaped by a simultaneous process in a state where end faces of a plurality of the rollers are in contact with each other; and
a protrusion which is axially protruded further than an axial end of the outer peripheral rolling contact surface, and
the protrusion:
has a protruded end face which, when the outer peripheral rolling contact surface is processed, is in contact with the end face of one of the rollers which are adjacent to each other;
forms an axial gap between ends of the outer peripheral rolling contact surfaces of the rollers which are adjacent to each other, in a state where the protruded end face is in contact with the end face; and
has a gap with respect to a tool when the outer peripheral rolling contact surface is processed.

2. The tripod constant velocity joint according to claim 1, further comprising a regulating member which is configured to regulate an axial movement of the roller in at least one axial direction of the roller, wherein
the roller has a regulating end face which is contactable with the regulating member, in an end face on a side which is radially inner than the protrusion, and
the protrusion is axially protruded further than the regulating end face.

3. The tripod constant velocity joint according to claim 1 or 2, wherein
the roller includes the protrusion on each of the axial ends of the roller, and, when the outer peripheral rolling contact surface is processed, the protrusions of the rollers which are adjacent to each other are in contact with each other.

4. The tripod constant velocity joint according to any one of claims 1 to 3, wherein the tool is a form grinding wheel, and
the outer peripheral rolling contact surfaces are simultaneously ground by the form grinding wheel in a state where the end faces of the plurality of rollers are in contact with each other.

5. A method of producing a tripod constant velocity joint, the tripod constant velocity joint comprising a roller which is rotatably supported by a tripod shaft and which is configured to roll along a raceway groove of an outer ring, wherein
the roller includes:
an outer peripheral rolling contact surface which is shaped by a simultaneous process in a state where end faces of a plurality of the rollers are in contact with each other; and
a protrusion which is axially protruded further than an axial end of the outer peripheral rolling contact surface, and
the method includes:
a placing step of placing the plurality of the rollers so that an end face of the protrusion of one of the rollers is in contact with an end face of the other roller, and forming an axial gap between ends of the outer peripheral rolling contact surfaces of the rollers which are adjacent to each other; and
a processing step of having a gap between a tool and the protrusion, and shaping the outer peripheral rolling contact surfaces of the plurality of the rollers which are placed in the placing step, by a simultaneous process using the tool.

6. The method of producing the tripod constant velocity joint according to claim 5, wherein, in the placing step, the rollers are placed so that the end faces of the protrusions of the rollers which are adjacent to each other are in contact with each other.
